# EUROPEAN PATENT SPECIFICATION

(11) **EP 1 289 395 B1**
(45) Date of publication and mention of the grant of the patent: **01.09.2004**
(21) Application number: 01934204.7
(22) Date of filing: 06.06.2001
(51) Int. Cl.: A47J 27/21, A47J 31/46

(54) **WATER HEATING APPARATUS**
WASSERERHITZUNGSGERÄT
APPAREIL DE CHAUFFAGE D'EAU

(30) Priority: 08.06.2000 GB 0013832; 15.06.2000 GB 0014506; 22.08.2000 GB 0020555; 13.10.2000 GB 0025071
(43) Date of publication of application: 12.03.2003
(73) Proprietor: Hartley, Brian, Chesterfield, Derbyshire S40 4DS (GB)
(72) Inventor: Hartley, Brian, Chesterfield, Derbyshire S40 4DS (GB)
(74) Representative: Parnham, Kevin
(86) International application number: PCT/GB2001/002470
(87) International publication number: WO 2001/093733

(56) References cited:
- DE-A- 4 424 055
- GB-A- 2 242 614
- US-A- 3 691 932

## Description

This invention relates to water heating apparatus. More particularly but not exclusively this invention relates to kettles for domestic use.

One problem associated with kettles is that a user fills the kettle with more water than required. This wastes electricity and the kettle also takes longer to boil.

Similarly, it is known from GB22426141 (STRIX), to provide jugs for coffee in which boiled water is mixed with cooler water at the spout where boiled water is not necessary and may be detriment to making coffee. Thus, water is provided of the correct temperature by creating a reduced volume of boiled water with the cooler water for the correct mixed volume ratio. However, tea making is an infusion and so requires all boiled water for it to be effective.

According to the present invention there is provided a water heating apparatus comprising a first reservoir having a water heating element and a second reservoir having an associated valve member arranged such that stored water in said second reservoir may be released into said first reservoir for heating, whereby specific desired amounts of water are released from said second reservoir to said first reservoir for heating, characterised in that, due to a sealing member to seal the second reservoir, eventual release of heated water is only from that first reservoir whilst any remaining stored water is separately retained in the second reservoir.

The water heating apparatus may comprise a kettle.

The first reservoir may comprise the main body of the kettle. The second reservoir may comprise a container located within the main body of the kettle.

The second reservoir may be located within the top portion of said first reservoir. The second reservoir may be received within said first reservoir in a push fit arrangement. The first reservoir may further comprise flanges extending inwardly from the inner surface of said first reservoir such that said second reservoir may be supported on said flanges.

Overflow means may comprise slots formed in the top portion of a wall of the second reservoir.

The valve may be located at the base of the second reservoir and positioned within a valve seat. The valve is attached to an upwardly extending spindle located within said second reservoir.

The spindle may be arranged to co-operate with an operating member such that pressure applied to said spindle opens said valve.

The spindle may include a resilient member such that the valve closes upon release of said operating member.

The operating member may comprise a button attached to a second spindle located through the lid of the kettle and further arranged to co-operate with the first spindle and thus the valve.

The valve may comprise a plug operable by a button interconnecting the valve via a spindle wherein said valve is released from an aperture such that water may flow from the second reservoir into the first reservoir.

The spindle may include a resilient member such that the valve closes upon release of said button or operating member.

The kettle may comprise a window through which the level of water may be observed. The kettle may comprise a water level indication means to indicate the amount of water in the first reservoir and in the second reservoir.

Also according to the present invention there is provided a kettle comprising a water heating apparatus as described above.

Embodiments of the present invention will now be described by way of example only, with reference to the accompanying drawings, in which:
Fig. 1 is a side view of water heating apparatus according to the present invention;
Fig. 2 is a partial perspective side view of the second reservoir of the water heating apparatus of Fig. 1;
Fig. 3 is a rear view of the second reservoir of the heating apparatus of Figs. 1 and 2 also showing internal features;
Fig. 4 is a front view of the second reservoir of the heating apparatus of Figs. 1 to 3 also showing some internal features;
Fig. 5 is an exploded view of the valve mechanism of the apparatus according to the present invention;
Fig. 6 is a top view of the heating apparatus according to Figs. 1 to 4, with the lid removed;
Fig. 7 is a perspective view of the spindle and associated operating button according to the present invention;
Fig. 8 is a perspective view of a water heating apparatus according to a further embodiment of the present invention;
Fig. 9 is a perspective view of the lid shown in Fig. 8; and
Fig. 10 is a view of the underneath of the kettle lid of Figs. 8 and 9
Fig. 11 is a side view of water heating apparatus according to a further embodiment of the present invention
Fig. 12 is a partial perspective side view of the water heating apparatus of Fig. 11.

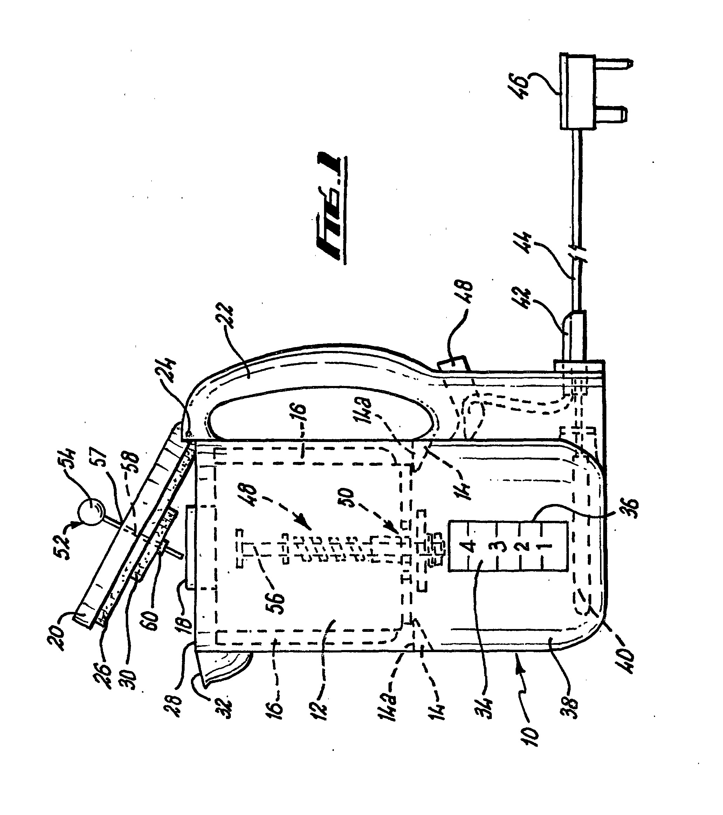

Referring to Fig. 1, water heating apparatus is shown in the form of a jug kettle 10. A reservoir 12 is arranged within the upper portion of the kettle 10 and is in the form of a separate container. The container 12 is mounted within the kettle 10 such that the inner wall of the kettle 10 purchases against the wall of the reservoir 12 and holds it firm therein. The reservoir 12 is mounted on two stoppers 14 to prevent the reservoir slipping down within the kettle 10. The stoppers 14 are formed in the shape of wedges, their flat surfaces 14a abutting the base of the reservoir 12.

The reservoir 12 comprises shaped portions 16 which allow water within the main body of the kettle 10 to be stored between the shaped walls 16 of the reservoir 12 and the inner walls of the kettle 10. An aperture 18 is arranged at the top of the reservoir which allows water to enter the reservoir. A lid 20 is attached to the handle 22 of the kettle 10 via a hinge member 24. The lid 20 is formed with a sealing flange 26 which seals against the rim 28 of the kettle 10 when the lid 20 is closed. A further sealing member 30 is attached to the underside of the lid 20. This sealing member 30 seals the aperture 18 of the reservoir 12 when the lid 20 is closed.

The kettle 10 is formed with a spout 32 through which water may be poured out from the main body of the kettle. A gauge 34 is provided as a calibrated window 36 which indicates the amount of water residing in the base 38 of the kettle 10. A heating element 40 is provided in the base 38 of the kettle 10 and is connected to an electrical supply from the mains via a socket 42, an electrical cable 44 and a plug 46. A switch 148 is provided adjacent the handle 22 of the kettle 10 and may be provided as a thermal switch which disconnects the electrical supply when the water boils.

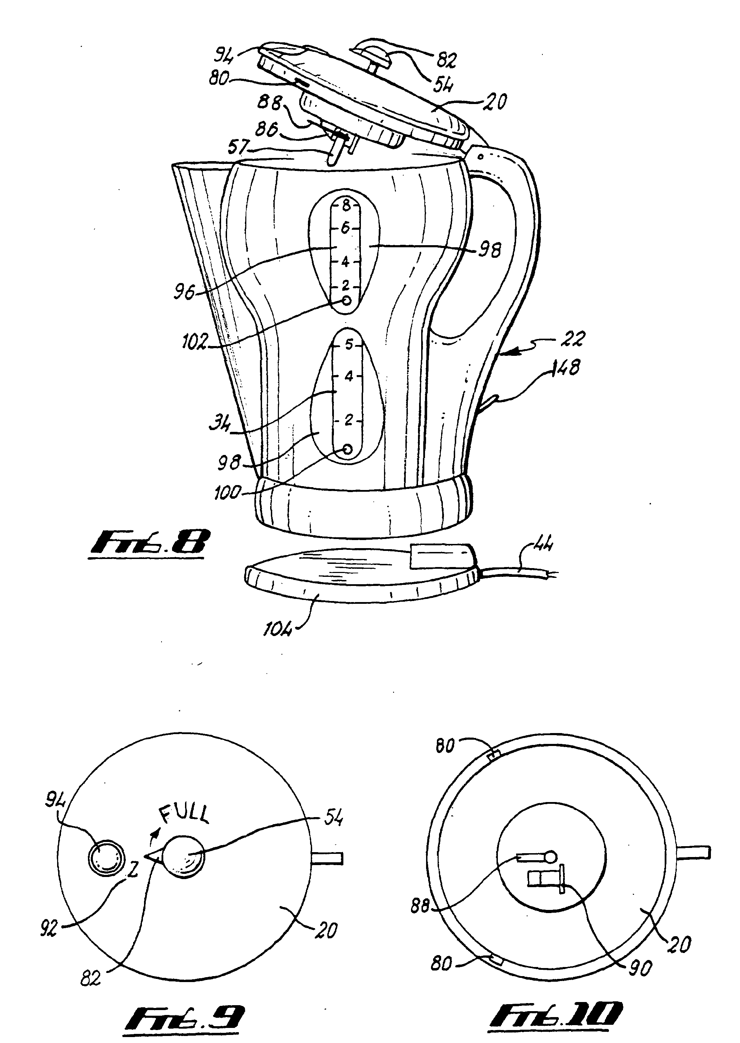

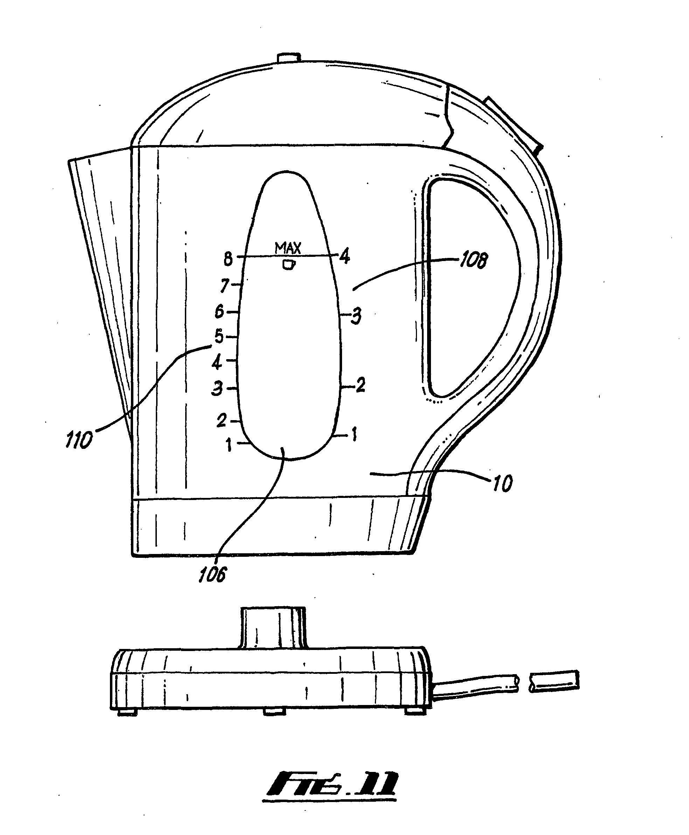

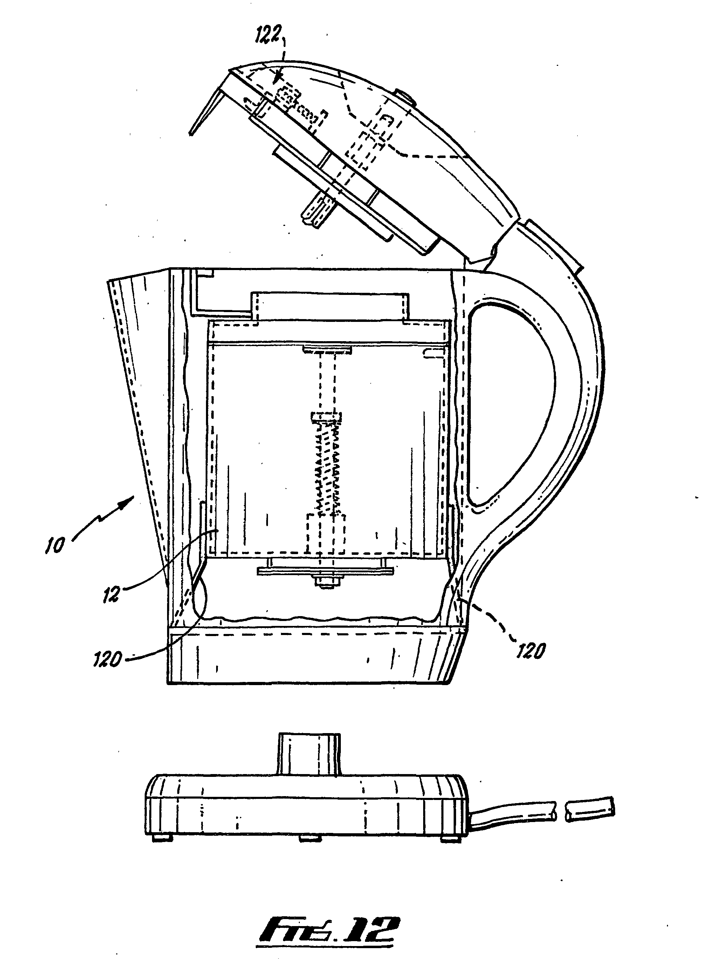

The reservoir 12 is provided with a valve member 48 arranged to open and close a hole 50 formed in the base of the reservoir 12. The valve member 48 is shown in more detail in Fig. 5. A valve operating member 52 comprises a knob 54 mounted on an operating rod 57 through a hole 58 formed within the lid 20. A washer 60 is arranged on the underside of the sealing member 30 so as to secure the operating member 52 within the lid. The rod 57 is mounted so as to be able to slide within the hole 58 and operate the valve member 48 when the lid is in the closed position.

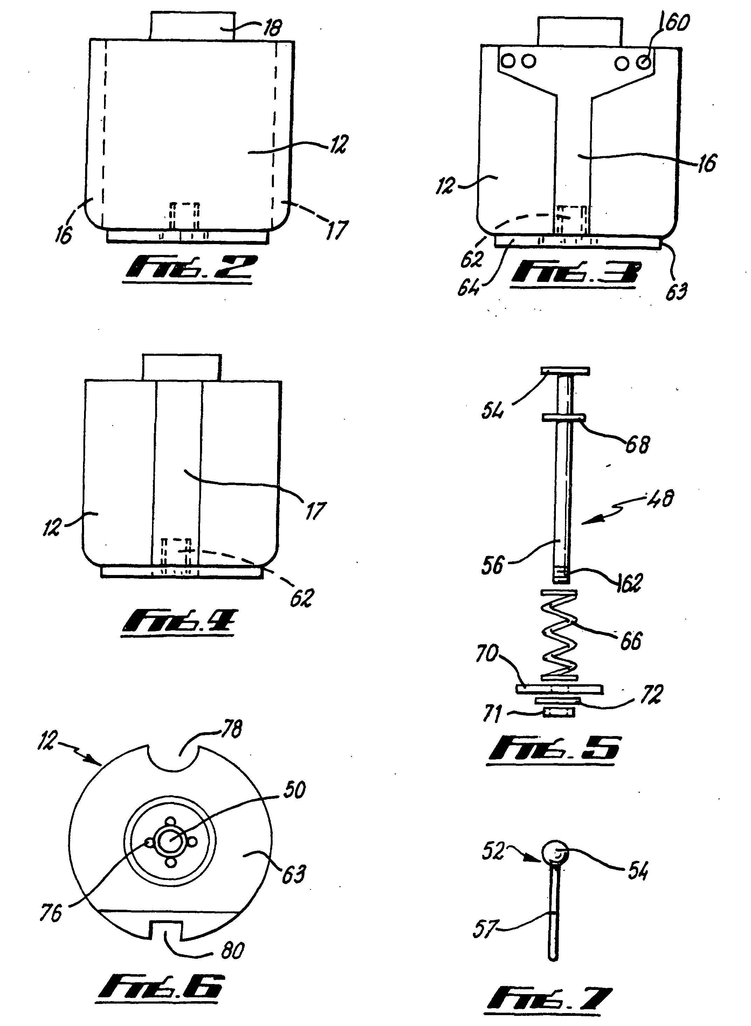

An exploded view of the operating member 52 is shown in Fig. 7. The reservoir 12 can be seen more clearly by referring to Figs. 2, 3 and 4. The reservoir 12 comprises shaped portions 16, 17 at its front and rear. The rear portion 16 is formed with overflow apertures 160 which allow water contained within reservoir 12 to flow into the kettle body 10 when the reservoir is full.

A circular protrusion 62 is provided in the base portion 63 of the reservoir 12. A hole is formed within this protrusion through which the rod 56 is mounted. An actuating rod 56 passes through the base 63 and then through a sealing washer 70 made from rubber or any other suitable material. This sealing washer is positioned underneath the base 63 of the reservoir 12 such that in a sealing position the holes 76 are covered and sealed.

Now referring to Figs. 5 to 7, the valve arrangement 48 comprises an actuating rod 56 attached to a sealing member 70. The actuating rod 56 is formed with a screw thread portion 162 at its base which is designed to attach the rod 56 to the sealing member 70 through a nut 71 and washer 72 to screw with a nut. A spring 66 is arranged to locate around rod 56 such that flange 68 abuts the spring 66 when the rod 56 is pressed downwards. The washer 72 is provided between the nut 71 and sealing member 70, formed as a washer, so as to mount the sealing washer 70 on the rod 56.

The base portion 63 of the reservoir 12 is substantially circular in shape. The hole 50 is formed in the base and the actuating rod 56 is located therein. Holes 76 are arranged around the hole 50 and allow water contained in the reservoir 12 to flow into the main body of the kettle 10 when required and upon release of the sealing washer 70. The reservoir 12 also comprises a shaped portion 78 so as to allow the fitting of the reservoir 12 around the kettle spout 32. An additional shaped portion 80 is arranged such that water may flow out of the reservoir 12 and into the main body of the kettle 10 when the reservoir is full.

In use, the kettle is filled by opening the lid 20 and allowing water to pass into the reservoir 12, through the hole 18. When the water reaches up to the four overflow holes 60, the water then passes through these and into the bottom of the kettle 10. The kettle may then be filled up to the number of cups required as indicated on the gauge 36.

A selected amount of water in the reservoir 12 may be released into the main body of the kettle 10 by releasing the sealing washer 70 upon actuation of knob 54.

The kettle lid 20 is now closed and the sealing member 30 seals the holes 18 in the reservoir 12 thus ensuring that when water is poured out of the kettle through the spout 32 water does not overflow from the reservoir 12. The kettle 10 is then connected to the mains electrical supply using the plug head 46 which is connected to the kettle heating element 40 through the electrical cable 44 and the socket 42. When the water boils the thermal switch 48 which is operated by the steam and hot water, switches the kettle 10 off. The desired amount of water may then be poured through the spout 32 from the main body of the kettle 10. If more water is required to be heated then water from the reservoir 12 may be released into the main body of the kettle 10 by pressing the knob 54 downwards and applying downward pressure to the rubber washer 70 which is then moved downwards so as to allow water to flow through the holes 76. As soon as the knob 54 is released, the spring 66 ensures that the rubber washer 70 returns to its original position underneath the base of the reservoir 12 and blocking the holes 76. Although in this embodiment of the invention the washer 70 is formed as a rubber washer any suitable material or design may be utilised. Advantageously, the kettle 10 may be easily utilised to boil only enough water for the user's requirements by releasing water stored in the reservoir 12 into the base of the kettle 10 when desired.

Alternatively, the kettle 10 may be filled through the spout 32 whereby water is directed into the main body of the kettle 10 initially filling base portion 38. The sealing member 70 is in an open position whereby the reservoir 12 may also be filled as the water rises in the main body of the kettle 10. In this embodiment both the main body of the kettle 10 and the reservoir 12 can be filled. If only the water in the main body of the kettle is required to be boiled, then the sealing member 70 can be moved to a closed position such that only the water in the main body of the kettle will boil, the water in the reservoir 12 remaining separate from the water in the main body of the kettle 10 and thus not being boiled.

In this embodiment of the invention it is envisaged that since the kettle 10 may also only be filled by introducing water initially into the main body the danger that the kettle could be boiled without water in the main body is alleviated.

Fig. 8 is a further example of a water heating apparatus in the form of a jug kettle. Its operation is similar to that described in relation to Fig. 1. In this embodiment, the top section of the kettle 10 is designated to be larger to store more water within reservoir 12.

The lid 20 is closed and held by two catches 80. These catches 80 connect with recesses formed in the inside of the top of the kettle 10. When water is filled in the base of the kettle and to the second container, the lid 20 is closed and held by the two catches 80. The knob 54 is pressed down and turned so that the pointer 82 is turned to the FULL position as indicated in Fig. 9. The valve operating member 52 then opens the valve or washer 70 (not shown in Figures 8-10) and this is held open as the knob 54 and rod 56 cannot be pressed upwards by the spring 66. A stopper in the form of a ramp 86 holds an arm 88 which is attached to the rod 56 and prevents the valve 48 from closing. A stopper 90 prevents the arm 88 from overshooting the ramp 86. Whilst the valve 48 in the base of the reservoir 12 remains open and the electrical supply switched on, all the water in the kettle 10 will boil.

To return to the selective position such that the valve can close again to control the release of water, the knob 54 is turned to the position shown at 92. To refill the kettle a button 94 is pressed to release the catches 80. Fig. 8 also shows a kettle gauge 96 through a see-through window 98 such that the amount of water held in the reservoir 12 can be seen by the user. The water levels in the bottom of the kettle 10 and the reservoir 12 can be easily viewed since two floats 100 and 102 move the gauges 34 and 96 as the water rises. The kettle 10 is shown as being cordless, thus connecting to the base 104 when it is placed on it, the electrical power being supplied through the cable 44 when connected to the main electricity supply.

Fig. 11 shows further embodiment of the present invention whereby the kettle 10 is provided with a transparent window 106. One side 108 of the window 106 is provided with a measurement gauge which denotes the amount of water in terms of cup sizes when only the main body of the kettle is filled with water through the spout 32. A second gauge 110 is provided on the opposite side of the window 106 and denotes the amount of water in cup sizes, when both first and second chambers are filled with water, the valve member 48 being in an open position. In this embodiment of the invention the inner chamber 12 is also manufactured from transparent material such that its water level can be readily identified.

Fig. 12 shows a further embodiment of the present invention. In this embodiment of the invention the kettle 10 is similar in operation to that shown in Fig. 1. However in this alternative embodiment the reservoir 12 is provided with feet 120 to provide location within the main body of the kettle 10. The kettle is also provided with a locking mechanism 122 which ensures that the lid may be locked into position when the kettle 10 is in use. Also the kettle 10 shown in Fig. 12 is of a jug kettle type configuration as shown in Fig. 11.

Although the reservoir 12 is referred to as a separate container in the aforementioned embodiments, it is also envisaged that the container 12 may form an integral part of the kettle 10 if required.

## Claims

1. Water heating apparatus (10) comprising a first reservoir having a water heating element and a second reservoir (12) having an associated valve member (48) arranged such that stored water in said second reservoir (12) may be released into said first reservoir for heating, whereby specific desired amounts of water are released from said second reservoir (12) to said first reservoir for heating, **characterised in that**, due to a sealing member (30) to seal the second reservoir (12), eventual release of heated water is only from that first reservoir whilst any remaining stored water is separately retained in the second reservoir (12).

2. Water heating apparatus (10) according to claim 1 wherein said apparatus comprises a kettle.

3. Water heating apparatus (10) as claimed in claim 2 wherein the kettle may comprise a jug kettle.

4. Water heating apparatus (10) as claimed in claims 1 to 3 wherein the first reservoir comprises the main body of the kettle.

5. Water heating apparatus (10) as claimed in claims 1 to 4 wherein the second reservoir (12) comprises a container located within the main body of the kettle.

6. Water heating apparatus (10) as claimed in claims 1 to 5 wherein the second reservoir (12) is located within the top portion of said first reservoir.

7. Water heating apparatus (10) as claimed in claim 6 wherein the second reservoir (12) is received within said first reservoir in a push fit arrangement.

8. Water heating apparatus (10) as claimed in claims 1 to 7 wherein the first reservoir comprises flanges extending inwardly from the inner surface of said first reservoir such that said second reservoir may be supported on said flanges.

9. Water heating apparatus (10) as claimed in claims 1 to 8 wherein the second reservoir (12) comprises water overflow means (160) wherein water may be directed therethrough into the first reservoir when the second reservoir (12) is full.

10. Water heating apparatus (10) as claimed in claim 9 wherein the overflow means (160) comprises slots formed in the top portion of a wall of the second reservoir (12).

11. Water heating apparatus (10) as claimed in any one of the preceding claims wherein the valve member (48) is located within the base (63) of the second reservoir (12) and positioned within a valve seat.

12. Water heating apparatus (10) as claimed in claim 11 wherein the valve member (48) is attached to spindle (56) located within said second reservoir (12), said spindle (56) being arranged to cooperate with an operating member (57) such that pressure applied to said spindle (56) opens said valve.

13. Water heating apparatus (10) as claimed in claim 12 wherein said operating member (56) comprises a button (94) attached to a second spindle located through the lid (20) of the kettle and further arranged to cooperate with the first spindle (56) and the valve.

14. Water heating apparatus as claimed in claims 10 to 13 wherein the valve member comprises a plug operable by a button interconnecting the valve via a spindle wherein said valve is released from an aperture such that water may flow from the second reservoir into the first reservoir.

15. Water heating apparatus as claimed in claims 2 to 14 wherein the kettle comprises water level indication means (100, (102) to indicate the amount of water in the first reservoir and in the second reservoir (12).

16. A water heating apparatus as claimed in any preceding claim wherein the water heating apparatus is a kettle.

## Patentansprüche

1. Wasseraufheizgerät (10), welches einen ersten Speicherbehälter mit einem Wasseraufheizelement und einen zweiten Speicherbehälter (12) mit einem zugeordneten Ventilglied (48) aufweist, die so angeordnet sind, dass in dem zweiten Speicherbehälter (12) gespeichertes Wasser in den ersten Speicherbehälter zum Aufheizen abgegeben werden kann, wobei spezifische gewünschte Mengen an Wasser von dem zweiten Speicherbehälter (12) an den ersten Speicherbehälter zum Aufheizen abgegeben werden, **dadurch gekennzeichnet, dass** aufgrund eines Abdichtungsglieds (30) zum Abdichten des zweiten Speicherbehälters (12) eine letztendliche Abgabe aufgeheizten Wassers nur von dem ersten Speicherbehälter erfolgt, während jegliches verbleibende gespeicherte Wasser in dem zweiten Speicherbehälter (12) gesondert gehalten wird.

2. Wasseraufheizgerät (10) nach Anspruch 1, **dadurch gekennzeichnet, dass** das Gerät einen Kessel aufweist.

3. Wasseraufheizgerät (10) nach Anspruch 2, **dadurch gekennzeichnet, dass** der Kessel einen Kannenkessel bzw. Krugkessel aufweisen kann.

4. Wasseraufheizgerät (10) nach Anspruch 1 bis 3, **dadurch gekennzeichnet, dass** der erste Speicherbehälter den Hauptkörper des Kessels aufweist.

5. Wasseraufheizgerät (10) nach Anspruch 1 bis 4, **dadurch gekennzeichnet, dass** der zweite Speicherbehälter (12) einen Behälter aufweist, der innerhalb des Hauptkörpers des Kessels angeordnet ist.

6. Wasseraufheizgerät (10) nach Anspruch 1 bis 5, **dadurch gekennzeichnet, dass** der zweite Speicherbehälter (12) sich innerhalb des oberen Abschnitts des ersten Speicherbehälters befindet.

7. Wasseraufheizgerät (10) nach Anspruch 6, **dadurch gekennzeichnet, dass** der zweite Speicherbehälter (12) innerhalb des ersten Speicherbehälters in einer Schubsitzanordnung aufgenommen ist.

8. Wasseraufheizgerät (10) nach Anspruch 1 bis 7, **dadurch gekennzeichnet, dass** der erste Speicherbehälter Flansche aufweist, die sich von der inneren Oberfläche des ersten Speicherbehälters derart nach innen erstrecken, dass der zweite Speicherbehälter auf den Flanschen abgestützt werden kann.

9. Wasseraufheizgerät (10) nach Anspruch 1 bis 8, **dadurch gekennzeichnet, dass** der zweite Speicherbehälter (12) ein Wasserüberlaufmittel (160) aufweist, in welchem Wasser in den ersten Speicherbehälter durchgeleitet werden kann, wenn der zweite Speicherbehälter (12) voll ist.

10. Wasseraufheizgerät (10) nach Anspruch 9, **dadurch gekennzeichnet, dass** das Wasserüberlaufmittel (160) Schlitze aufweist, die im oberen Abschnitt einer Wand des zweiten Speicherbehälters (12) ausgebildet sind.

11. Wasseraufheizgerät (10) nach einem der vorhergehenden Ansprüche, **dadurch gekennzeichnet, dass** sich das Ventilglied (48.) innerhalb der Basis (63) des zweiten Speicherbehälters (12) befindet und innerhalb eines Ventilsitzes positioniert ist.

12. Wasseraufheizgerät (10) nach Anspruch 11, **dadurch gekennzeichnet, dass** das Ventilglied (48) an einer Spindel (56) angebracht ist, die sich innerhalb des zweiten Speicherbehälters (12) befindet, wobei die Spindel (56) derart angeordnet ist, dass sie mit einem Betätigungsglied (47) zusammenwirkt, so dass an der Spindel (56) anliegender Druck das Ventil öffnet.

13. Wasseraufheizgerät (10) nach Anspruch 12, **dadurch gekennzeichnet, dass** das Betätigungsglied (56) einen Knopf (94) aufweist, der an einer zweiten Spindel angebracht ist, die durch den Deckel (20) des Kessels hindurch angeordnet ist und außerdem dazu ausgelegt ist, um mit der ersten Spindel (56) und dem Ventil zusammenzuwirken.

14. Wasseraufheizgerät nach Anspruch 10 bis 13, **dadurch gekennzeichnet, dass** das Ventilglied einen Stöpsel aufweist, der mittels eines Knopfes betätigbar ist, der das Ventil über eine Spindel verbindet, wobei das Ventil von einer Öffnung derart gelöst wird, dass Wasser von dem zweiten Speicherbehälter in den ersten Speicherbehälter fließen kann.

15. Wasseraufheizgerät nach Anspruch 2 bis 14, **dadurch gekennzeichnet, dass** der Kessel Wasserpegel-Anzeigemittel (100, 102) aufweist, um die Wassermenge in dem ersten Speicherbehälter und in dem zweiten Speicherbehälter (12) anzuzeigen.

16. Wasseraufheizgerät nach einem der vorhergehenden Ansprüche, **dadurch gekennzeichnet, dass** das Wasseraufheizgerät ein Kessel ist.

## Revendications

1. Appareil de chauffage d'eau (10) comprenant un premier réservoir doté d'un élément chauffant l'eau et un deuxième réservoir (12) muni d'un élément formant clapet (48) associé placé de manière à ce que l'eau stockée dans ledit deuxième réservoir (12) peut être envoyée dans ledit premier réservoir pour être chauffée, des quantités spécifiques d'eau désirées étant envoyées dudit deuxième réservoir (12) audit premier réservoir pour être chauffées, **caractérisé en ce que**, grâce à un élément d'étanchéité (30) destiné à fermer hermétiquement le deuxième réservoir (12), la libération de l'eau chauffée qui en résulte ne peut se faire qu'à partir du premier réservoir alors que l'eau restante stockée est séparément retenue dans le deuxième réservoir (12).

2. Appareil de chauffage d'eau (10) selon la revendication 1, dans lequel ledit appareil comprend une bouilloire.

3. Appareil de chauffage d'eau (10) selon la revendication 2, dans lequel la bouilloire peut comprendre une bouilloire sous forme de broc.

4. Appareil de chauffage d'eau (10) selon les revendications 1 à 3, dans lequel le premier réservoir comprend le corps principal de la bouilloire.

5. Appareil de chauffage d'eau (10) selon les revendications 1 à 4, dans lequel le deuxième réservoir (12) comprend un récipient placé à l'intérieur du corps principal de la bouilloire.

6. Appareil de chauffage d'eau (10) selon les revendications 1 à 5, dans lequel le deuxième réservoir (12) est situé dans la partie supérieure dudit premier réservoir.

7. Appareil de chauffage d'eau (10) selon la revendication 6, dans lequel le deuxième réservoir (12) est reçu à l'intérieur dudit premier réservoir suivant un ajustement légèrement dur.

8. Appareil de chauffage d'eau (10) selon les revendications 1 à 7, dans lequel le premier réservoir comprend des brides s'étendant vers l'intérieur à partir de la surface intérieure dudit premier réservoir de telle sorte que ledit deuxième réservoir peut être supporté par lesdites brides.

9. Appareil de chauffage d'eau (10) selon les revendications 1 à 8, dans lequel ledit deuxième réservoir (12) comprend un moyen formant trop plein d'eau (160) dans lequel l'eau peut être dirigée à travers lui dans le premier réservoir lorsque le deuxième réservoir (12) est plein.

10. Appareil de chauffage d'eau (10) selon la revendication 9, dans lequel le moyen formant trop plein (160) comprend des fentes ménagées dans la partie supérieure d'une paroi du deuxième réservoir (12).

11. Appareil de chauffage d'eau (10) selon l'une quelconque des revendications précédentes, dans lequel l'élément formant clapet (48) est situé à l'intérieur de la base (63) du deuxième réservoir (12) et est positionné à l'intérieur d'un siège de clapet.

12. Appareil de chauffage d'eau (10) selon la revendication 11, dans lequel l'élément formant clapet (48) est fixé à une tige (56) placée à l'intérieur dudit deuxième réservoir (12), ladite tige (56) étant disposée pour coopérer avec un élément de commande (57) de telle sorte que la pression appliquée à ladite tige (56) ouvre ledit clapet.

13. Appareil de chauffage d'eau (10) selon la revendication 12, dans lequel ledit élément de commande (56) comprend un bouton (94) fixé à une deuxième tige placée à travers le couvercle (20) de la bouilloire et en outre disposé pour coopérer avec la première tige (56) et le clapet.

14. Appareil de chauffage d'eau (10) selon les revendications 10 à 13, dans lequel l'élément formant clapet comprend un bouchon susceptible d'être actionné par un bouton interconnecté au clapet via une tige, dans lequel ledit clapet est libéré d'une ouverture de telle sorte que l'eau peut s'écouler du deuxième réservoir dans le premier réservoir.

15. Appareil de chauffage d'eau (10) selon les revendications 2 à 14, dans lequel la bouilloire comprend un moyen indicateur de niveau d'eau (100), (102) pour indiquer la quantité d'eau dans le premier réservoir et dans le deuxième réservoir (12).

16. Appareil de chauffage d'eau (10) selon l'une quelconque des revendications précédentes, dans lequel l'appareil de chauffage d'eau est une bouilloire.
